# EUROPEAN PATENT APPLICATION

(11) **EP 1 667 010 A1**
(43) Date of publication of application: **07.06.2006**
(21) Application number: 03818646.6
(22) Date of filing: 10.09.2003
(51) Int. Cl.: G06F 3/00

(54) **INFORMATION PROCESSING DEVICE FOR SETTING BACKGROUND IMAGE, INFORMATION DISPLAY METHOD, AND PROGRAM**

(71) Applicant: FUJITSU LIMITED, Kawasaki-shi, Kanagawa 211-8588 (JP)
(72) Inventor: TAMAKI, Kenichi, c/o Fujitsu Limited, Kawasaki-shi, Kanagawa 211-8588 (JP); ASAWA, Takeo, c/o Fujitsu Limited, Kawasaki-shi, Kanagawa 211-8588 (JP)
(74) Representative: Seeger, Wolfgang
(86) International application number: PCT/JP2003/011556
(87) International publication number: WO 2005/026933

(57) **Abstract**

An information processing device for controlling display means for displaying information together with a background image, comprising display control means for allowing the display means to display an image and setting means for setting a background image on the basis of the image when a predetermined operation is detected while the image is being displayed.

## Description

### Technical Field

The present invention relates to an information processing apparatus such as a personal computer.

### Background Arts

In an information processing apparatus such as a personal computer, for example, a variety of static images or patterns (which are so-called background images) have hitherto been displayed on a backscreen during an operation by a user. Further, during a period for which the user does not use the information processing apparatus, a standby screen (which is a screen displayed by a so-called screen saver). Proposed further are functions of the screen saver such as displaying, in addition to the simple patterns , various categories of information, e.g., a mail receiving condition, a state of the information processing apparatus, and so on (refer to, e.g. , Patent documents 1 - 3).

In the conventional computer etc, the user, when setting, e.g. , a static image as a background image, must refer to an image file pre-stored on the personal computer and must set the static image as the background image. Furthermore, in order for the user to set an original image as the background image, it is required that the image filepre-storedwith this image be set to enable the personal computer to refer to this file (for instance, the image file is registered in a predetermined folder of the personal computer) .

On the other hand, a main setting system in the screen saver is that the user similarly selects one of fixed patterns registered beforehand. Moreover, customization of the screen saver is in such a mere phase as to provide a function, wherein, for instance, a present desktop screen (initial screen image) is snapshotted, and an image thereof is set as a screen saver image. Hence, there is no consideration that readily updates the backscreen etc of the information processing apparatus and provides a user with a fresh usage atmosphere.
Patent document 1
   Japanese Patent Application Laid-Open Publication No.2000-66648
Patent document 2
   Japanese Patent Application Laid-Open Publication No. 2002-55929
Patent document 3
   Japanese Patent Application Laid-Open PublicationNo. 2001-337663

### Disclosure of the Invention

The present invention was devised in view of the problems inherent in such prior arts. Namely, it is an obj ect of the present invention to enable an information processing apparatus such as a personal computer to easily generate a user's original image and set this image as a background image.

The present invention adopts the following means in order to solve the problems described above. Namely, the present invention is an information processing apparatus capable of controlling display means displaying information together with a background image, comprising display control means making the display means display an image, and setting means setting, when a predetermined operation is detected in a status where the image is displayed, the background image on the basis of the image.

According to the present information processing apparatus m when detecting a predetermined operation, e.g. , a user operation on the information processing apparatus, the background image is set based on an image displayed on a display device. As a result, the background image can be changed frequently by the user operation.

Preferably, the display control means may make the display means display moving images, and the setting means may set, as the background image, a static image at a specified point of time that is contained in the moving images, corresponding to the predetermined operation. According to the present information processing apparatus, the image, at the specified point of time, contained in the moving images is set as the background image.

Preferably, the display control means may get the moving images displayed on a standby screen displayed in a status with no user operation done on the information processing apparatus, and the setting means, when the operation is detected during the display of the standby screen, may set the static image at the specified point of time that is contained in the moving images as the background image.

According to the present invention, when the operation upon the standby screen is detected, the background image is set based on the moving images displayed on this standby screen.

Preferably, the information processing apparatus may further comprise retaining means retaining a plurality of static images, and means generating the moving images from the retained static images.

Preferably, the information processing apparatus may further comprise image storage means stored with the static images forming the moving images and displayed at predetermined points of time, wherein the setting means may set, as the background image, the static image stored on the image storage means.

According to the present invention, the static image contained in the moving images is stored on the image storage means, and the stored static image at the point of time when the operation is detected, is set as the background image.

Preferably, the information processing apparatus may further comprise means referring to information on a procedure of generating the moving images, and storage means stored with information on a procedure of generating the static images forming the moving images and displayed at the predetermined points of time, wherein the setting means may generate the static image according to the procedure information and may set the generated static image as the background image.

According to the present invention, the information on the procedure for generating the static image is stored, and, when the operation is detected, the static image is generated according to this procedure information and is set as the background image.

Preferably, the information processing apparatus may further comprise means communicating with another information processing apparatus, wherein the display control means may get the image displayed in accordance with an instruction given from another information processing apparatus.

Preferably, the information processing apparatus may further comprise means transmitting, to another information processing apparatus, information about the image to be displayed by another information processing apparatus.

According to the present invention, the background image can be set in association with another information processing apparatus.

Further, the present invention may also be a method by which a computer or other device, machine, etc executes any one of the processes described above. Still further, the present invention may also be a program for making the computer or other device, machine, etc actualize any one of the functions, the steps, or the processes. Yet further, the present invention may also be a readable-by-computer recording medium recorded with such a program, which can be read by the computer or other device, machine, etc.

### Brief Description of the Drawings

FIG. 1 is a diagram of a system architecture of an information processing apparatus according to a fist embodiment of the present invention;
FIG. 2 is a diagram of an external configuration in the case of configuring the information processing apparatus by use of a general type of personal computer;
FIG. 3 is a diagram (table) showing a data structure of each of records stored on an image database 3;
FIG. 4 is a diagram showing a data structure of each of records stored on an image synthesizing rule database 8;
FIG. 5 shows a dataflow (1) in the information processing apparatus in FIG. 1;
FIG. 6 shows a dataflow (2) in the information processing apparatus;
FIG. 7 shows a dataflow (3) in the information processing apparatus;
FIG. 8 shows a screen example (1) of a screen generated by the information processing apparatus;
FIG. 9 shows a screen example (2) of the screen generated by the information processing apparatus;
FIG. 10 shows a screen example (3) of the screen generated by the information processing apparatus;
FIG. 11 is a flowchart (1) showing a background image setting process of the information processing apparatus;
FIG. 12 is a flowchart (2) showing the background image setting process of the information processing apparatus;
FIG. 13 is a flowchart (1) showing a modified example of the background image setting process;
FIG. 14 is a flowchart (2) showing a modified example of the background image setting process;
FIG. 15 is a diagram showing a procedure of storing an image storage unit 2 with specified images (or a rule for synthesizing these images) in moving images displayed on a standby screen;
FIG. 16 is a flowchart showing a process (details of step 2 in FIG. 11) of storing the images on the synthesized image storage unit 2 for a moving image stream in FIG. 15;
FIG. 17 is a diagram showing another example of the procedure of storing the image storage unit 2 with the specified images (or a rule for synthesizing these images) in the moving images displayed on the standby screen;
FIG. 18 shows an example of displaying the standby screen (screen saver) in synchronization taken among three information processing apparatus;
FIG. 19 shows an example, wherein waves occurred on the screen of the central information processing apparatus are propagated and displayed as a wave pattern on the screens of the information processing apparatus on the right and left sides;
FIG. 20 is a processing flowchart showing a setting procedure of setting clients and a server;
FIG. 21 is a flowchart (1) of the background image setting process in a second embodiment of the present invention;
FIG. 22 is a flowchart (2) of the background image setting process in the second embodiment of the present invention;
FIG. 23 is a processing flowchart showing a procedure of setting the clients and the server in a modified example;
FIG. 24 is a flowchart (1) showing a process of setting the background image by a plurality of information processing apparatus ;
FIG. 25 is a flowchart (2) showing the process of setting the background image by the plurality of information processing apparatus; and
FIG. 26 is a flowchart (3) showing the process of setting the background image by the plurality of information processing apparatus.

### Best Mode for Carrying out the Invention

An information processing apparatus according to a preferred embodiment of the present invention will hereinafter be described with reference to the drawings.

### <<Outline of Function>>

In the present information processing apparatus, a screen image displayed on a display device, e.g. , a standby screen (screen image) (which is a so-called screen saver image) waiting for a user operation is specified at a predetermined point of time (for example, an image corresponding to one frame in moving images outputted by the screen saver, is specified) and is set as a background image. The specified point of time is, for instance, a point of time when the image display of the screen saver is stopped by the user's starting an operation on the information processing apparatus during the image display of the screen saver on the information processing apparatus.

As the screen image displayed by the screen saver, the following multiple screen images can be utilized.
(1) The screen image is generated by changing, on a time basis, a color, a pattern, etc of the screen image displayed by the screen saver according to a predetermined rule (which is also called the Rule) .
(2) The screen image is generated by changing on the time basis an eye point at the screen image displayed by the screen saver such as the eye point at a scene (sight) and an object within the screen according to the predetermined rule. For example, an engine is ignited, a logo is fired, and so on.
(3) Prepared is the rule for transforming the screen image corresponding to a history of the operations inputted by the user in the past to the information processing apparatus. Then, based on the actual operation history, a should-be-applied rule is acquired, and the screen image is thereby generated. Herein, the rule is defined as designation of changing a color, a luminance, etc in the vicinity of a position where the user clicks a mouse on the screen with an elapse of a predetermined period of time and with a predetermined quantity, and so forth. Further, the pattern in the screen image may also be changed in accordance with a click interval of the mouse. Moreover, a display speed and a change rate of the screen image may be controlled corresponding to a key input on a keyboard.
(4) A rule corresponding to an output of a sensor connected to the information processing apparatus is prepared, and the screen image is generated by applying the rule to the output of the sensor. Herein, the rule is to change a zoom of the screen in accordance with an input sound volume from, e.g., a microphone connected to the information processing apparatus, and so on. Further, the pattern of the screen may be changed corresponding to reaction of a personal sensor (an infrared sensor, a touch sensor, etc) . Moreover, coloration of the screen may be varied corresponding to an illuminance of illumination in a room.
(5) An image (picture) from a camera connected directly or via network to an input/output interface of the information processingapparatus, is displayed during the operation of the screen saver.
(6) A rule to be applied corresponding to an internal status of the information processing apparatus such as a processing speed and an execution efficiency, a memory occupancy and an execution process count of a CPU etc, is prepared beforehand, and the screen image is changed according to this rule.
(7) The screen image may also be generated in association with other information processing apparatus connected via the network. A procedure of the association is exemplified such as displaying the same screen image in synchronization taken among the plurality of information processing apparatus, and sequentially propagating variations of the screen image to the plurality of information processing apparatus and displaying the screen image with a time lag.
(8) The rules (1) through (7) given above may also be applied in combination.

Such functions enable the user to easily update thebackscreen (background image) . It should be noted that the backscreen generated by the present functions can be also identified from a storage destination (e.g., a file name or a folder name) of the backscreen generated by the present functions. Then, on the occasion of starting up the screen saver, if the backscreen is a screen generated by the present functions , the screen saver according to the present functions is startedup, and, whereas if thebackscreen is not the screen generated by the present functions, a conventional screen saver (which is, e.g., a saver designated by the user or preinstalled in the information processing apparatus) may also be started.

### <<First Embodiment>>

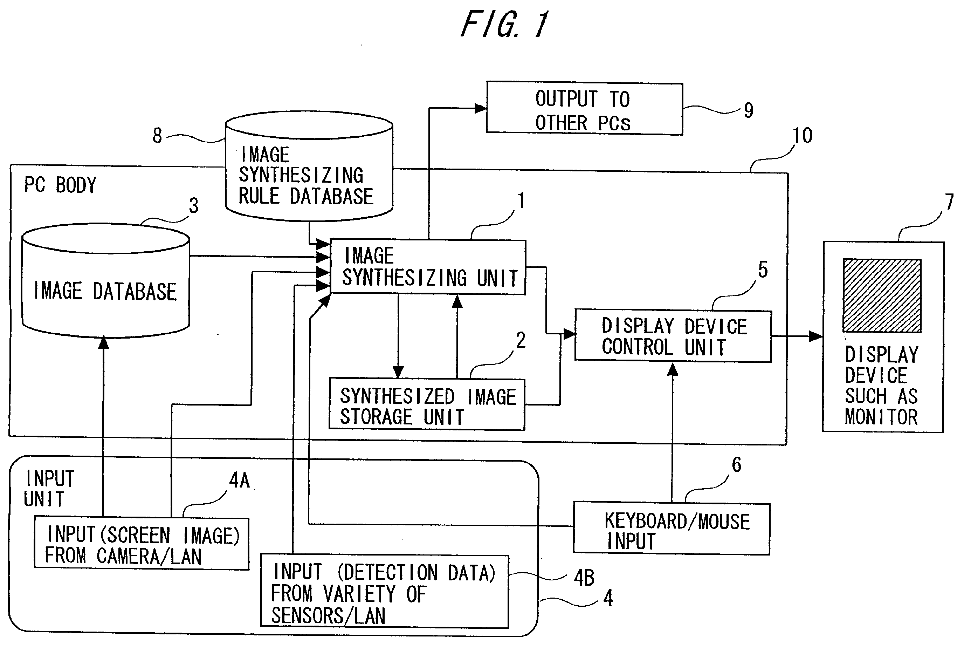

The information processing apparatus according to a first embodiment of the present invention will hereinafter be described with reference to the drawings in FIGS. 1 through 17.

### <System Architecture>

FIG. 1 is a diagram of a system architecture of the information processing apparatus. As shown in FIG. 1, this information processing apparatus includes a computer body 10 such as a personal computer, a display device 7 such as a monitor that is connected to the computer body 10, an input unit 4 serving as an interface for data inputted to the computer body 10, an input device 6 such as a keyboard or a mouse (which is depicted as a keyboard/mouse input in FIG. 1) and an output interface 9 for the data to other information processing apparatus.

The computer body 10 further includes an image database 3 stored with the images, an image synthesizing rule database 8 stored with rules for synthesizing the images, an image synthesizing unit 1 that synthesizes images into a new image on the basis of the images stored on the image database 3 by referring to the rule on the image synthesizing rule database 8, a synthesized image storage unit 2 stored with the images synthesized by the image synthesizing unit 1, and a display device control unit 5 outputting, to the display device 7, the image synthesized by the image synthesizing unit 1 and the image stored on the synthesized image storage unit 2 or the information inputted from the input device 6.

Connected also to the inputunit 4 are a screen image interface 4A that inputs a screen image from a connecting destination via a camera or a LAN (Local Area Network), a data interface 4B that inputs sensor detection data from a connecting destination via a variety of sensors or the LAN, and the input device 6 such as the keyboard or the mouse. The following are explanations of the respective components.

### (Image Synthesizing Unit 1)

The image synthesizing unit 1 captures, via the input unit 1, the data from the variety of sensors, the image (picture) from the camera, the image from the connecting destination via the LAN, the data from the keyboard or the data from the mouse, and so forth. Then, the image synthesizing unit 1 reads the rule from the image synthesizing rule database 8, and synthesizes the images according to the rule and the data inputted via the input unit 4.

On this occasion, in addition to the image inputted from the camera via the input unit 4, the images may also be synthesized based on the images stored on the image database 3. Then, the image synthesizing unit 1 transmits the synthesized image to the display device control unit 5 or the synthesized image storage unit 2.

### (Synthesized Image Storage Unit 2)

The synthesized image storage unit 2 is storedwi th the images synthesized by the image synthesizing unit 1. Note that the synthesized image storage unit 2 may also be stored with, in place of directly storing the images, a rule for synthesizing these images. In the case of desiring to store the rule in place of the images, the synthesized image storage unit 2, when outputting to the display device control unit 5, invokes the image synthesizing unit 1 and, after synthesizing the images, may output this synthesized image to the display device control unit 5.

### (Image Database 3)

The image database 3 is stored with image data required for synthesizing the images. Alternatively, the image database 3 is temporarily stored with the image data (either moving images or static images may be available) captured by the camera etc.

### (Input Unit 4)

Inputted to the input unit 4 are image data of an external environment imaged by the camera etc, image data of the external environments imaged by the cameras etc of other information processing apparatus,the detection datafrom the varietyofsensors, and the data from the input device such as the keyboard/mouse.

### (Display Device Control Unit 5)

The display device control unit 5 judges whether the present information processing apparatus is in a standby status waiting for a user operation or in an operating status where the user is in the middle of operating. Then, the display device control unit 5 executes the following processes, depending on whether the information processing apparatus is in the standby status or in the operating status.
(1) In the standby status, the display device control unit 5 executes the following process . To be specific, the display device control unit 5 monitors the input device 6 via the input unit 4, and checks whether a user input (an input from the keyboard/mouse etc) is given or not.
   If the user input is given, the display device control unit 5 changes over the display on the display device 7 to a user operation screen. In this case, the display device control unit 5 displays the image stored on the synthesized image storage unit 2 as a background image on the display device 7.
(2) In the user operating status, the display device control unit 5 executes a process that follows. Namely, the display device control unit 5 monitors the input device 4 via the input unit 4, and measures a period for which none of the user input is given. Then, when a certain predetermined and preset period of time elapses in a status with no user input, the display device control unit 5 changes over the display on the display device 7 to a standby screen (on which to display the image synthesized by the image synthesizing unit 1, the image given from the camera, etc).

### (Image Synthesizing Rule Database 8)

The image synthesizing rule database 8 is stored with the rules necessary for synthesizing the images.

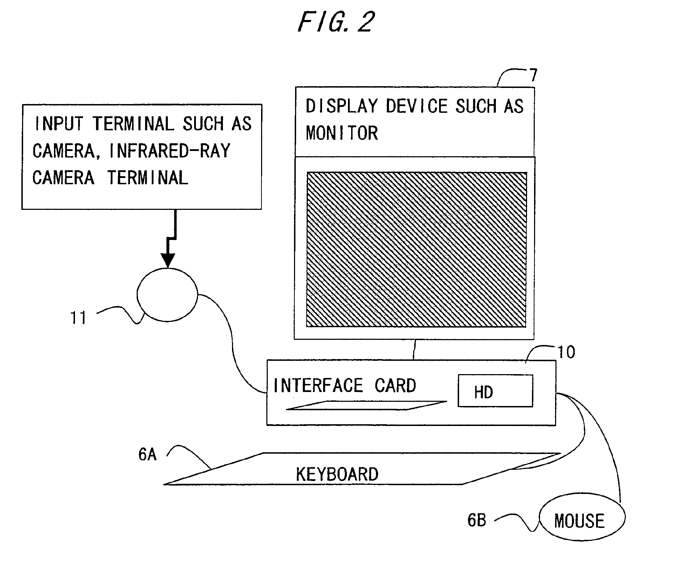

FIG. 2 is a diagram of an external configuration in the case of configuring the information processing apparatus by use of a general type of personal computer. As in FIG. 2, the information processing apparatus is configured by connecting, to the computer body 10 such as the personal computer, a camera 11 (a digital camera, a digital video camera, an infrared-ray camera terminal, etc), a keyboard 6A, a mouse 6B and the display device 7 such as the monitor. The computer body 10 has a various types of built-in interface cards, a built-in hard disc drive, etc. The configuration and the operation of this type of information processing apparatus are broadly known, and hence their explanations are omitted.

### <Data Structure>

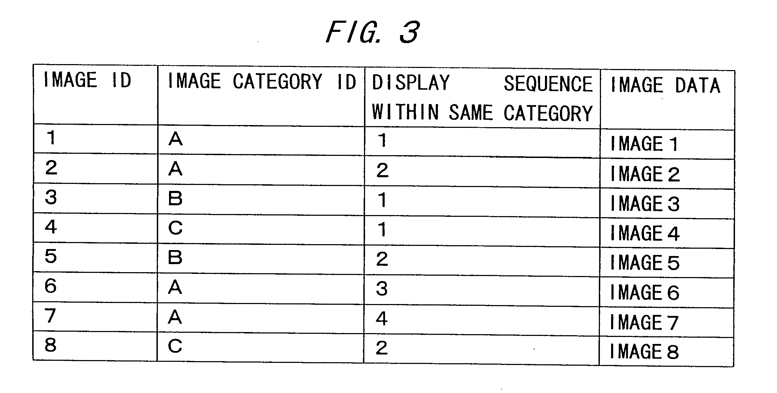

FIG. 3 is a diagram (table) showing a data structure of each of records stored on the image database 3. One row in the table shown in FIG. 3 corresponds to one record. As in FIG. 3, the record on the image database 3 has fields such as an image ID, an image category ID, an display sequence within same category and image data. One image data set is managed based on one record consisting of items of data entered in these fields.

The image ID is information, e.g., a serial number, for uniquely identifying each image throughout the imaged database 3. The image category ID is information for identifying a category of the image data managed based on the record. The image category is, for example, information for categorizing the image data as below.
(1) Image used in a case where the color changes;
(2) Image used in a case where the pattern changes;
(3) Image used in a case where the screen image streams (time variations of scene, time variations of eye point, etc); and
(4) Image used in a case where an object within the screen is changed over (an engine is ignited, a logo is fired, and so on).

The intra-identical-category display sequence is information that defines a display sequence of the image data belonging to one image category. For instance, the image data belonging to the image category employed in the case where the screen image streams are displayed in the intra-identical category display sequence, whereby the screen image is displayed as if streaming on the display device 7.

The image data field is stored with a location and a file name of a data file that stores the image data. The location of the data file is, e.g. , a host name, a folder name (directory name), etc, on the network, of the computer stored with the file. Note that if the location of the data file is the information processing apparatus itself, the host name may be omitted. Further, in place of the location and the file name of the data file stored with the image data, the image data itself may be stored in the image data field.

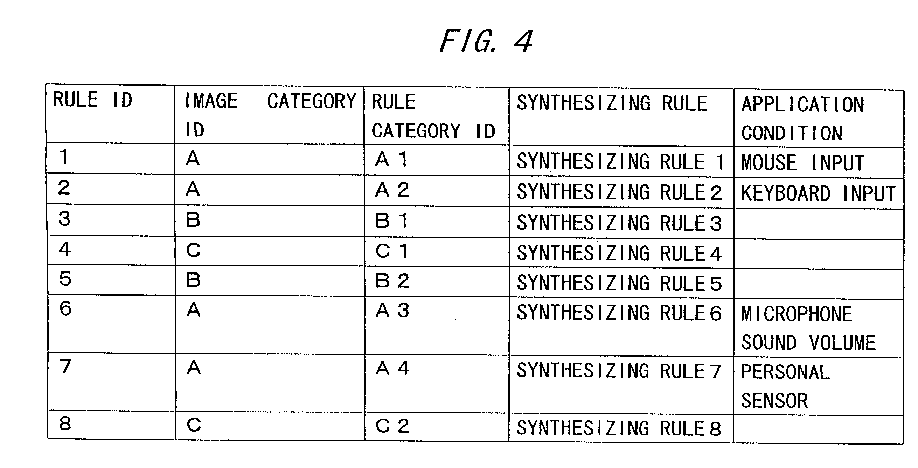

FIG. 4 is a diagram showing a data structure of each of records stored on the image synthesizing rule database 8. Each record on the image synthesizing rule database 8 has a definition of the synthesizing rule that should be applied when a predetermined application condition is satisfied with respect to each image category. The synthesizing rule is exemplified such as "screen coloration is varies corresponding to a history of the nearest positions of the mouse pointer with respect to an image group used in the case where the color changes". Further, another rule is exemplified such as "changing a screen changeover speed corresponding to a history of the nearest key inputs with respect to the image group used in the case where the color changes".

One row in the table shown in FIG. 4 corresponds to one record. As shown in FIG. 4, each of the records on the image synthesizing rule database 8 has fields such as a rule ID, an image category ID, a rule category ID, a synthesizing rule and an application condition.

The rule ID is information, e.g. , a serial number, for uniquely identifying each rule throughout the image synthesizing rule database 8. The image category ID specifies an ID of the image category to which the synthesizing rule in the record should be applied. The rule category ID specifies a category of the synthesizing rule. Then, the synthesizing rule is information that designates a specific synthesizing rule.

For instance, if the image category ID represents "an image group used in the case where the color changes", the rule category ID "A1" specifies such a rule category that "the screen coloration varies corresponding to a position of the mouse pointer". Then, "Rule 1" in the synthesizing rule field designates, e.g. , a variation quantity of the coloration. It is therefore possible to define a plurality of rules having the same rule category in the same image category but designating different synthesizing rules.

The application condition designates a condition under which the synthesizing rule is applied. The applied rules are, for example, a rule applied to a mouse input, a rule applied to a keyboard input, a rule applied to a microphone input, a rule applied to an input from a personal sensor, and so on.

### <Dataflow>

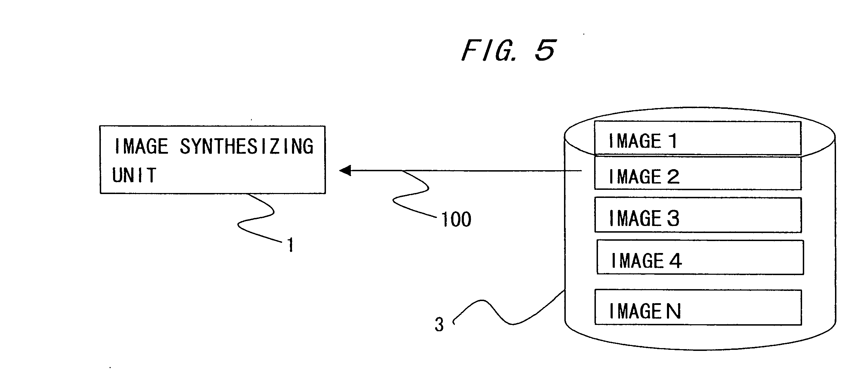

FIGS. 5 through 7 each show a dataflow in the present information processing apparatus. FIG. 5 shows a dataflow in a case, wherein the image synthesizing unit 1 generates a screen image of the screen saver at an interval of a predetermined period of time.

In this process, a variation type of the screen saver and changeover time of the screen saver are previously set. The image synthesizing unit 1, when the set time elapses, extracts from the image database 3 the image in the image group where the images are sequenced corresponding to the variation type of the screen saver (an arrow 100). Then, the image synthesizing unit 1 stores the corresponding image or the image ID on the synthesized image storage unit 2.

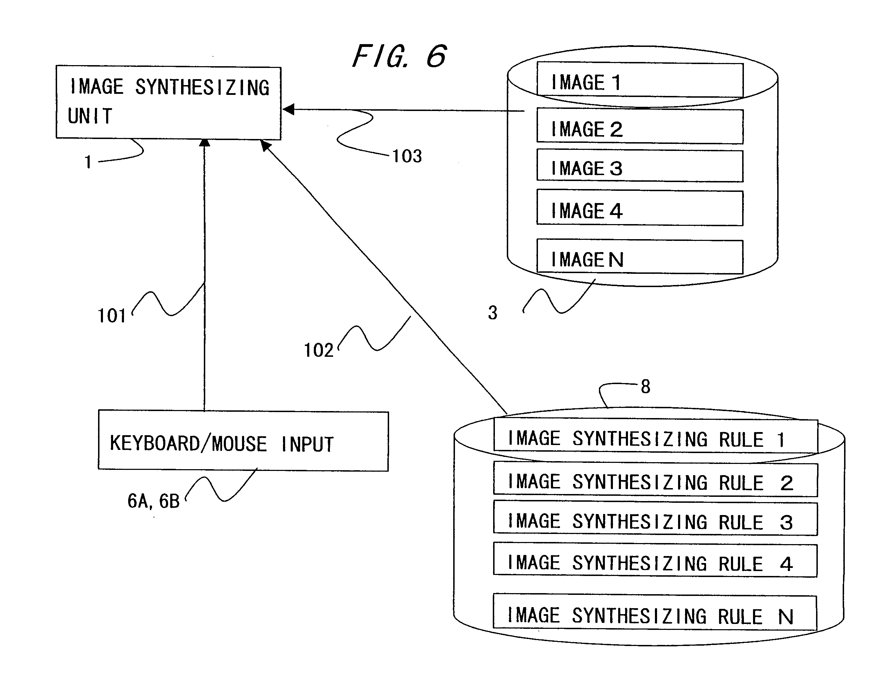

FIG. 6 shows a dataflow in such a case that the image synthesizing unit 1 generates the screen image of the screen saver in accordance with a history of the keyboard operations or of the mouse operations by the user.

In this process, the image synthesizing unit 1 captures an input from the keyboard 6A or the mouse 6B just before a transition to the standby screen (an arrow 101) . The image synthesizing unit 1 extracts from the image synthesizing rule database 8 an image synthesizing rule corresponding to the input from the keyboard 6A or the mouse 6B (an arrow 102) . Next, the image synthesizing unit 1 takes the image data out of the image database 3 on the basis of the image synthesizing rule (an arrow 103), and synthesizes the images. Then, the image synthesizing unit 1 stores the synthesized image storage unit 2 with the synthesized image or the rule applied to this image synthesization.

This process is exemplified such as "synthesizing, if the last user operation is a mouse click, in a position where the user clicks an image 3 with the mouse on an image 1 in the image database 3". Herein, "the synthesizing in the mouse click position" connotes a process in which the user synthesizes the images in a way that matches an origin of the image 3 with the position on the image 1 corresponding to the mouse click position on within the screen of the display device 7, and so forth.

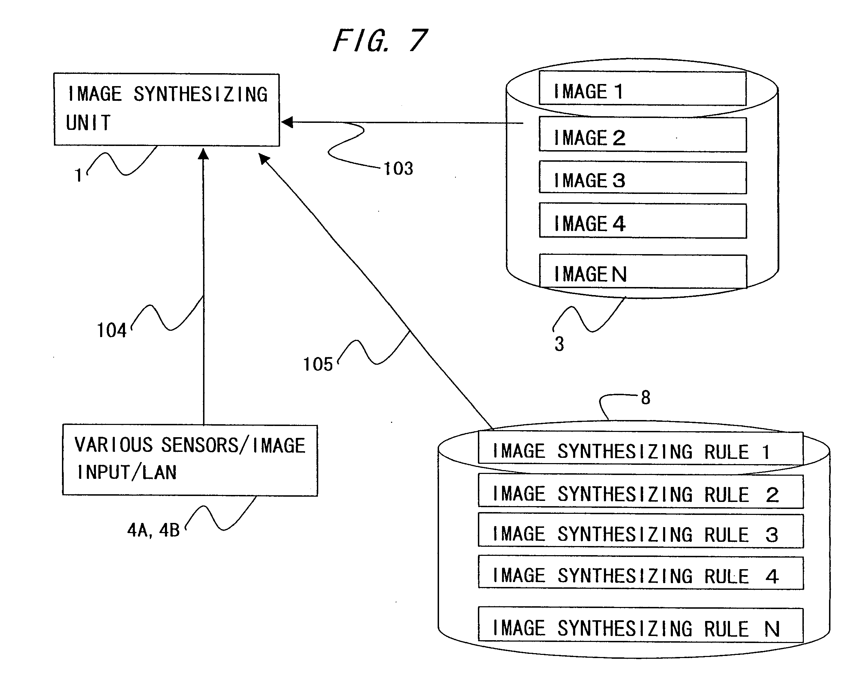

FIG. 7 shows a dataflow in the case of generating the screen image of the screen saver by use of the image data given from the screen image interface 4A or the data of the variety of sensors (or the connecting destination via the LAN) from the data interface 4B and the rule on the image synthesizing rule database 8.

In this process, for instance, the image synthesizing unit 1 acquires pieces of information showing the internal statuses (the process ing speed, the CPU execution efficiency , the memory occupancy, etc) of the information processing apparatus from a system program such as OS (Operating System) . Further, for instance, the image synthesizing unit 1 captures the output etc of the personal sensor via the data interface 4B (an arrow 104). Moreover, for example, the image synthesizing unit 1 may take in the screen image from the camera via the screen image interface 4A. Furthermore, these pieces of data may also be captured from the information processing apparatus as the connecting destination via the LAN.

Next, the image synthesizing unit 1 extracts, from the image synthesizing rule database 8, the image synthesizing rule corresponding to the captured data (the data from the system program, the data from the variety of sensors, the image input, the data via the LAN, etc) (an arrow 105) . The image synthesizing unit 1 extracts, based on the image synthesizing rule, the image data from the image database 3 (an arrow 106), and synthesizes the images. The image synthesizing unit 1 stores the synthesized image storage unit 2 with the synthesized image or the rule applied to this image synthesization.

Note that a motion of a person may be detected from the screen image of the camera by the following process. For instance, the image synthesizing unit 1 captures an input image from the camera etc, and stores the input image on the image database 3. Next, the image synthesizing unit 1 compares the input image from the camera etc with the input image, being given from the camera etc, and stored on the image database 3 just before the comparison. In this comparison, if the variation quantity is equal to or larger than a predetermined value, it may be assumed that the person is detected, and the rule in that case may also be applied.

The image synthesized in the procedure described above is stored on the image synthesized image storage unit 2 and is outputted according to an elapse of the time as a standby screen image of the screen saver. Then, when the user starts employing the information processing apparatus, the standby screen image (the image stored on the image synthesized image storage unit 2) at that point of time is acquired and displayed as a background image on the desktop screen (initial screen).

### <Screen Example>

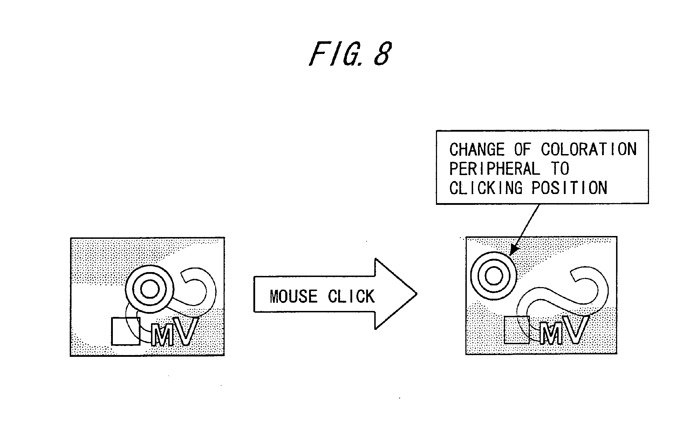

FIGS. 8 through 10 each shows an example of the screen image generated by the present information processing apparatus. Fig. 8 shows an example, wherein the background image on the desktop screen of the information processing apparatus changes depending on a click position of the mouse. In this example, the information processing apparatus is stored beforehand with the history of the click positions of the mouse, and generates the standby screen (moving image) of which gradation varies momentarily corresponding to the history of the click positions. Then, the screen image just when the user starts using the information processing apparatus is set as the background image.

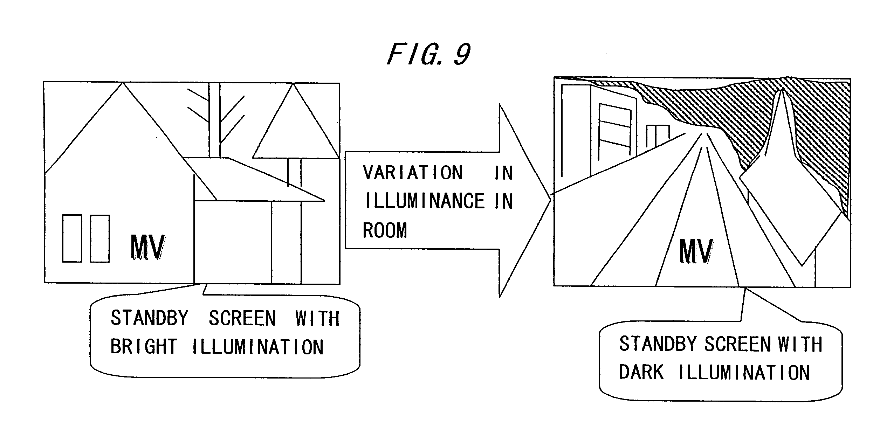

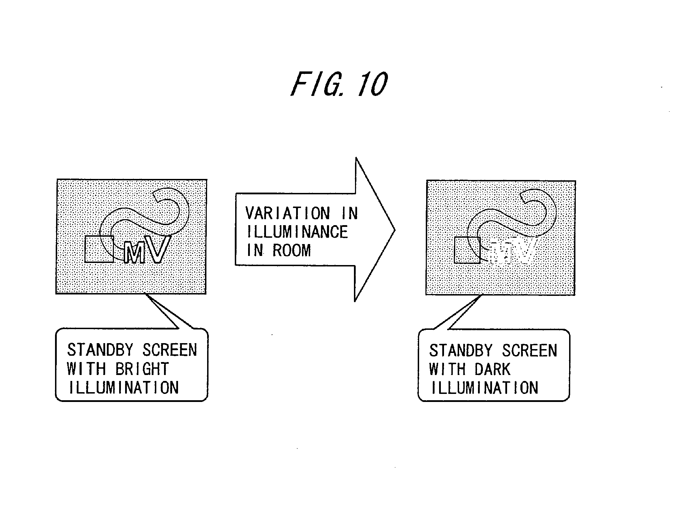

FIGS. 9 and 10 each shows an example in which the standby screen image changes depending on variations in illuminance in the room. FIGS. 9 and 10 each shows a change in two screen images by way of one example, however, the present information processing apparatus retains, e.g., a plurality of sequentially-changing images on the image database 3. Then, the present information processing apparatus sequentially displays such images as the illuminance in the room changes, thus configuring the standby screen. Then, the screen image j ust when the user starts using the information processing apparatus is set as the background image.

### <Background Image Set Processing Flow>

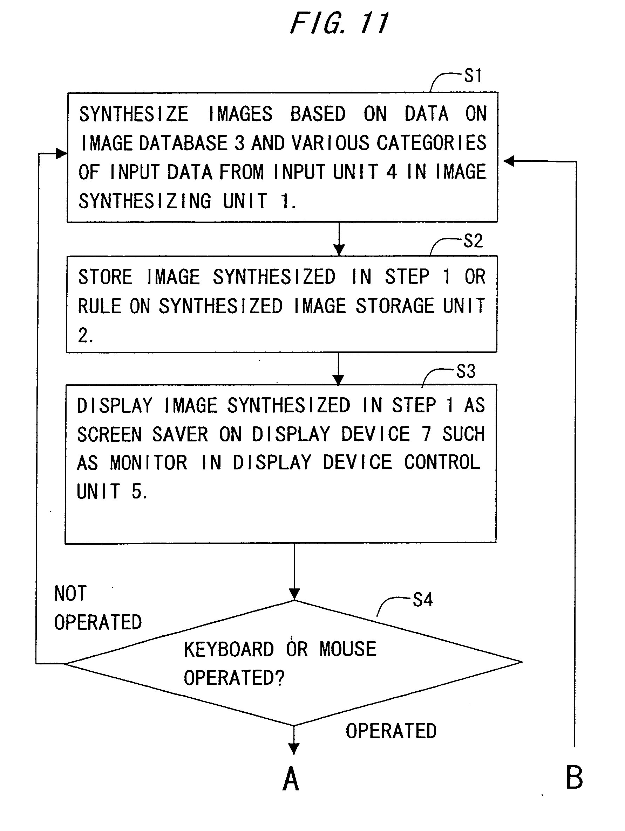

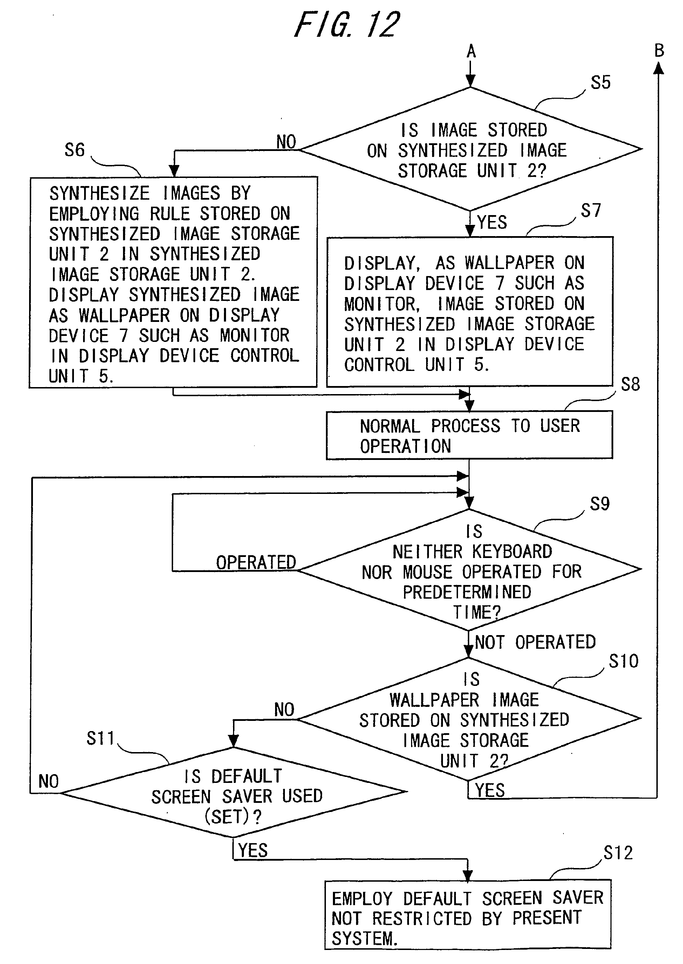

FIGS. 11 and 12 are flowcharts each showing a background image setting process of the present information processing apparatus. In this information processing apparatus, to begin with, the image synthesizing unit 1 synthesizes the images based on the data on the image database 3 and the variety of input data from the input unit 4 (step 1, which will hereinafter be abbreviated such as S1).

Next, the present information processing apparatus stores the synthesized image storage unit 2 with the image synthesized in step 1 or the rule specifying an image synthesizing procedure thereof (S2).

Next, in the present information processing apparatus, the display device control unit 5 displays the image synthesized in step 1 as the screen saver (the standby screen) on the display device 7 such as the monitor (S3).

Next, the present information processing appa=atus judges whether either the keyboard operation or the mouse operation is done or not (S4) . If neither the keyboard operation nor the mouse operation is done, the information processing apparatus returns the control to S1. Whereas if any one of the keyboard operation and the mouse operation is detected, the information processing apparatus judges whether or not the image is stored on the synthesized image storage unit 2 (whether the rule is stored or not) (S5).

If none of the image is stored on the synthesized image storage unit 2 (if the rule is stored), in the present information processing apparatus, the image synthesizing unit 1 synthesizes the images by use of the rule stored on the synthesized image storage unit 2. Further, the display device control unit 5 in the present information processing apparatus displays the synthesized image as the background image (wallpaper) on the display device 7 such as the monitor (S6). Thereafter, the information processing apparatus starts a normal process with respect to the user operation (S8) .

While on the other hand, if the image is stored on the synthesized image storage unit 2, the display device control unit 5 in the present information processing apparatus displays the image stored on the synthesized image storage unit 2 as the background image (wallpaper) on the display device 7 such as the monitor (S7) . Thereafter, the information processing apparatus starts the normal process with respect to the user operation (S8).

Next, the information processing apparatus monitors whether neither the keyboard operation nor the mouse operation is done for a predetermined period of time (S9). If neither the keyboard operation nor the mouse operation is done for the predetermined period of time, the information processing apparatus next judges whether or not the background image (wallpaper) is the image stored on the synthesized image storage unit 2 (S10).

If the background image (wallpaper) is the image stored on the synthesized image storage unit 2, the information processing apparatus returns the control to S1. Whereas if the background image (wallpaper) is not the image stored on the synthesized image storage unit 2, the information processing apparatus judges whether setting of employing the default standby screen (screen saver) is made or not (S11).

If set to use the default standby screen, the present information processing apparatus uses the conventional standby screen according to this setting (S12) . Whereas if not set to use the default standby screen, the present information processing apparatus returns the control to S9. Accordingly, in this case, the standby screen is not displayed.

As described above, according to the present information processing apparatus, the image synthesized by the image synthesizing unit 1 on the basis of the history of the user operations and the data given from the variety of sensors, is displayed as the standby screen (screen image) on the display device 7. Then, at a point of time when the user operation using the keyboard 6A, the mouse 6B, etc is detected during the display of such a standby screen, the image being displayed on the standby screen (the image stored on the synthesized image storage unit 2) is set directly as the desktop backscreen. In this process, the backscreen is updated each time the user operation with respect to the output of the standby screen is detected.

### <Modification of Background Image Setting Process>

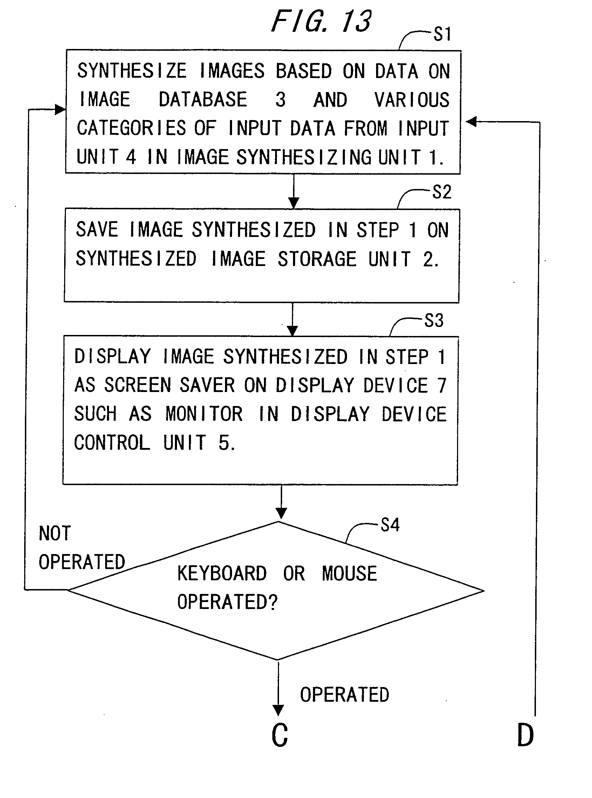

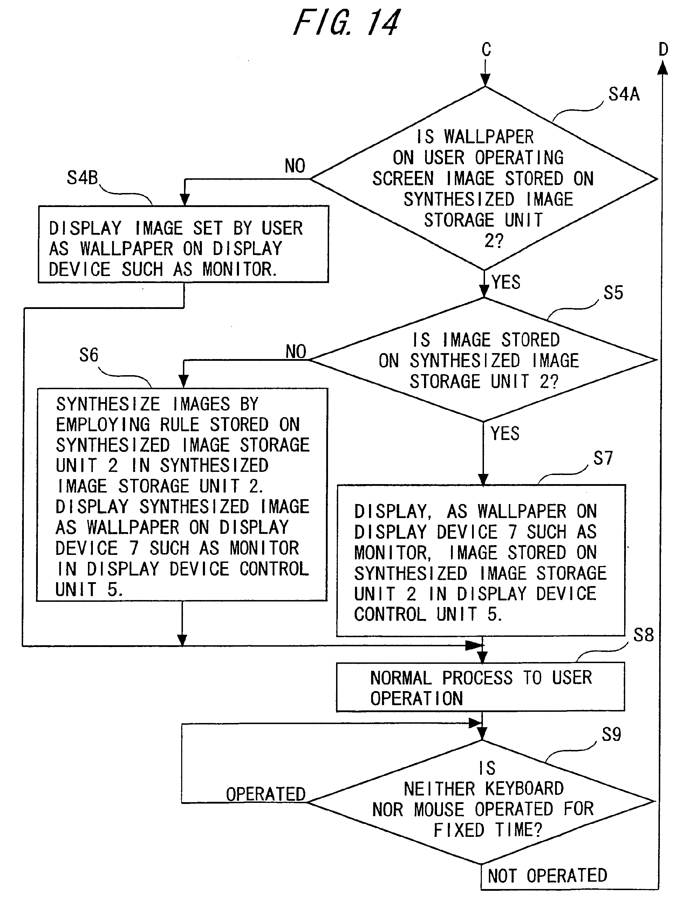

FIGS. 13 and 14 show a modified example of the background image setting process. In the process in FIGS. 11 and 12, the information processing apparatus, if neither the keyboard operation nor the mouse operation is done for the predetermined period of time, judges whether not the background image (wallpaper) is the image stored on the synthesized image storage unit 2. On the other hand, in a processing example in FIGS. 13 and 14, when the keyboard operation or the mouse operation for the standby screen is detected, it is judged whether or not the background image (wallpaper) is the image stored on the synthesized image storage unit 2. Other procedures in FIGS. 13 and 14 are the same as those in FIGS. 11 and 12. Such being the case, the same processing steps are marked with the same numerals and symbols, and their explanations are omitted.

To be specific, in step 4 in FIG. 13, when the keyboard operation or the mouse operation is detected during the display of the standby screen, the information processing apparatus judges whether or not the background image (wallpaper) in the normal operating status of the user is the image stored on the synthesized image storage unit 2 (S4A).

Then, if the background image (wallpaper) in the normal operating status of the user is the image stored on the synthesized image storage unit 2, the information processing apparatus executes the processes in steps 5 through 9. These processes are the same as in the case shown in FIG. 12.

Whereas if the background image (wallpaper) in the normal operating status of the user is not the image stored on the synthesized image storage unit 2, the information processing apparatus displays the default background image (the wallpaper of the conventional personal computer etc) according to the user setting. Thereafter, the information processing apparatus executes the processes from step 8 onward.

### <Example of Image (Rule) Storage Process>

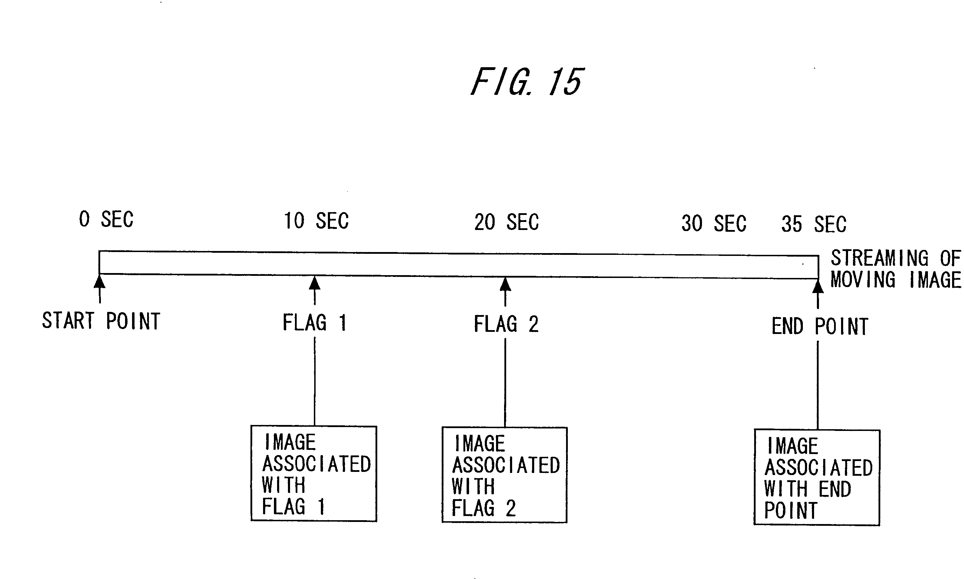

FIG. 15 shows a procedure of storing the image storage unit 2 with a specified image (or a rule for synthesizing this image) in moving images displayed on the standby screen. In FIG. 15, a moving image stream connotes moving image data that are consecutively displayed on the standby screen.

In frame data (e.g., MPEG (Moving Picture Experts Group) frames) that form this moving image stream, flags are set in the specified frame data. In FIG. 15, a start point is set in the frame data at a point of 0 sec after the start of the moving images (moving picture), a flag 1 is set in the frame data at a point of an elapse of approximately 10 sec, a flag 2 is set in the frame data at a point of an elapse of approximately 20 sec, and an end point is set in the frame data at a point of an elapse of approximately 35 sec. Further, in the example in FIG. 15, static images are previously associated with the respective flags (e.g., the image associated with the flag 1, the image associated with the flag 2 , the image associated with the end point, and so on) .

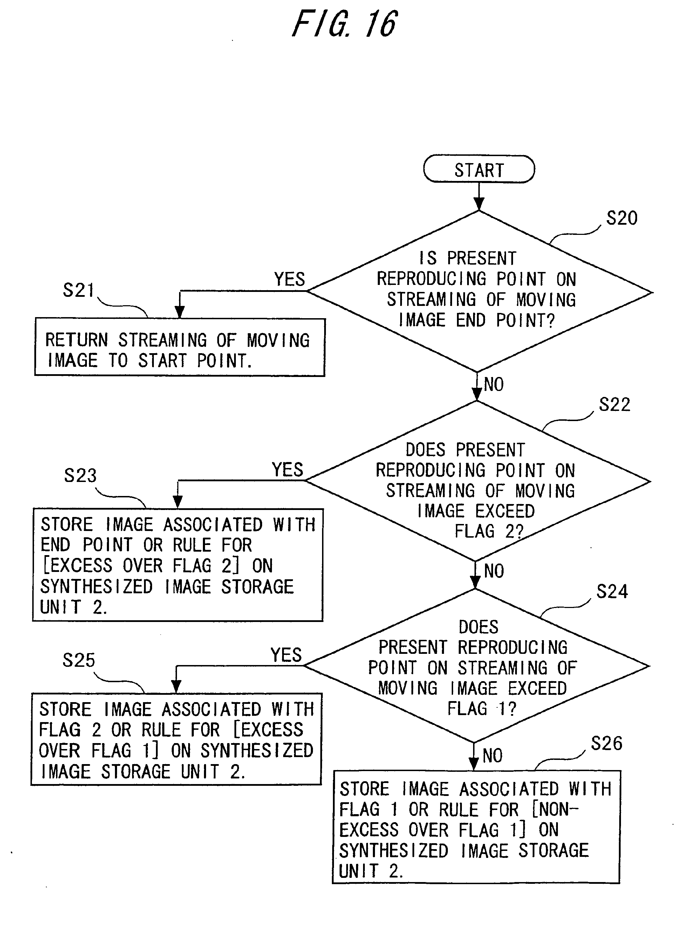

FIG. 16 shows a process (details of step 2 in FIG. 11) of storing the images on the synthesized image storage unit 2 for the moving image stream in FIG. 15. It is to be noted that the process in FIG. 16 is an exemplification of the process in the case of setting the flags 1, 2 and the end point in the moving image frames. The number of flags is not, however, necessarily limited to 3 points (generally, N-pieces of flags may be set without any necessity of the flags being limited to 1 and 2).

In this process, the image synthesizing unit 1, to start with, judges whether a present reproducing point on the moving image stream is the end point or not (S21). If the present reproducing point on the moving image stream is the end point, the image synthesizing unit 1 moves the present reproducing point back to the start point of the moving image stream, and returns the processing to the start.

While on the other hand, if the present reproducing point on the moving image stream is not the endpoint, the image synthesizing unit 1 judges whether or not the present reproducing point on the moving image stream goes beyond (exceeds) the flag 2 (S22). If the present reproducing point goes beyond the flag 2, the image synthesizing unit 1 stores the synthesized image storage unit 2 with the image data associated with the end point (S23) . Then, the image synthesizing unit 1 returns the processing to the start. Instead of directly storing the image data, however, the rule (the rule applied to, e. g. , the excess of the flag 2 over the reproducing point) for generating the image may also be stored.

Further, whereas if the present reproducing point does not go beyond the flag 2, the image synthesizing unit 1 judges whether or not the present reproducing point on the moving image stream goes beyond the flag 1 (S24). If the present reproducing point goes beyond the flag 1, the image synthesizing unit 1 stores the image data associated with the flag 2. Then, the image synthesizing unit 1 returns the processing to the start. Instead of directly storing the image data, however, the rule (the rule applied to, e.g., the excess of the flag 1 over the reproducing point) for generating the image data may also be stored.

Moreover, whereas if the present reproducing point does not go beyond the flag 1, the image synthesizing unit 1 stores the image data associated with the flag 1. Then, the image synthesizing unit 1 returns the processing to the start. Instead of directly storing the image data, however, the rule (the rule applied to, e.g. , the reproducing point from the start point up to the flag 1) for generating the image data may also be stored.

The process in FIG. 15 has exemplified the process of previously setting the flags in the frame data forming the moving image stream and determining which image is stored on the synthesized image storage unit 2 depending on whether the reproducing point goes beyond the respective flags during the reproduction of the moving images. As a substitute for the flag, however, the image to be stored on the synthesized image storage unit 2 may also be designated based on an elapsed time. For instance, if the standby screen (screen image) is formed of the data captured in real time from the camera etc, or a moving image generated in real time by computer graphics, information for designating the elapsed time such as a point of time of 10 sec, 20 sec, 25 sec, etc from the start of the reproduction, may be retained as parameters. Then, there may be executed a process of storing the image at the point of time of 10 sec on the synthesized image storage unit 2 for the elapsed time from the reproduction start up to 10 sec, the image at the point of time of 20 sec on the synthesized image storage unit 2 for the elapsed time from 10 sec up to 20 sec, the image at the point of time of 25 sec on the synthesized image storage unit 2 for the elapsed time from 20 sec up to 25 sec, and so on.

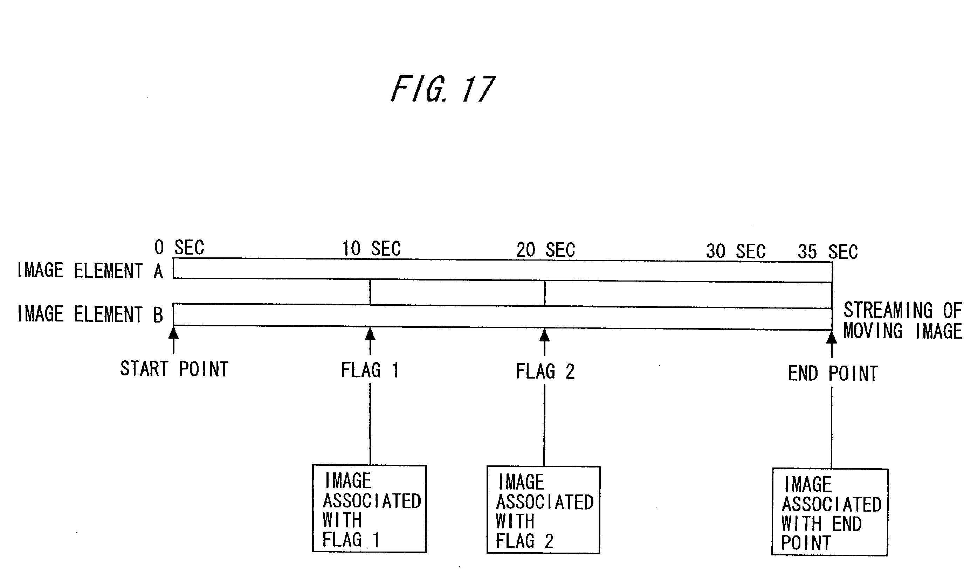

FIG. 17 shows another example of the procedure of storing the image storage unit 2 with specified images (or a rule for synthesizing these image) in the moving images displayed on the standby screen. In this process, an image element A is sequentially generated in a way that varies, e.g. , a color stepwise from an image element B defined as an original image, whereby the image element A is displayed on the standby screen. On the occasion of this type of image generation, the image to be stored on the synthesized image storage unit 2 may be determined from an evaluation value of the image, wherein, for example, if a mean value of R in RGB (Red, Green, Black) with respect to all pixels within the screen reaches a predetermined value (e.g., 60), this implies an excess over the flag 1, if the mean value of R reaches a second predetermined value (e.g. , 100), this implies an excess over the flag 2, and so forth.

Moreover, for instance, a synthesized image acquired by adding stepwise-changing weights to the image element A and the image element B, may also be displayed on the standby screen. In such a case, the image to be stored on the synthesized image storage unit 2 may be determined from an evaluation value of the image, wherein, for example, when the weight to the image element A reaches a first predetermined value, this implies an excess over the flag 1, when the weight to the image element A reaches a second predetermined value, this implies an excess over the flag 2, and so on.

### <Modification of Standby Screen>

In the embodiment discussed above, the image synthesized by the image synthesizing unit 1 is displayed by the screen saver as the standby screen. In place of this synthesized image, an image inputted from outside via the camera etc may also be displayed by the screen saver. In this case, in the procedure shown in FIG. 15, elapsed time from output starting time of the moving image may be employed as a flag.

Thus, the present information processing apparatus employs, as the standby screen (screen image), various categories of images such as the image (picture) from the camera, the data from the variety of sensors, the image from other information processing apparatus via the LAN, or the image synthesized by the image synthesizing unit 1. It is therefore feasible to readily and frequently update the background image in combination with the setting function of the background image.

### <Other Modified Example>

In the embodiment discussed above, when detecting the user operation during the display of the standby screen by the screen saver, the desktop background image is displayed in a way that refers to the images stored on the synthesized image storage unit 2 or the rule for synthesizing these images. In place of the synthesized image storage unit 2, however, for example, the desktop background image is displayed in a way that refers to an image memory such as a video RAM immediately after detecting the user operation.

The embodiment discussed above has exemplified the process of setting the desktop background image on the basis of the moving image displayed on the standby screen by the screen saver. The embodiment of the present invention is not, however, limited to the standby screen by the screen saver. For instance, a window for displaying the moving image from the camera (video camera) and the moving image etc of TV broadcasting, or a browser for displaying a Web site for providing the moving images is outputted to the display device 7 such as the monitor, wherein at a point of time when a specified operation of the user is detected, the image displayed in the window or the browser may be set as the background image. Herein, the specified operation of the user is exemplified such as pressing a predetermined key, and clicking (pressing, selecting and designating by a pointing device) an obj ect like a predetermined icon or menu on the desktop (initial screen) of the display device 7.

### <<Second Embodiment>>

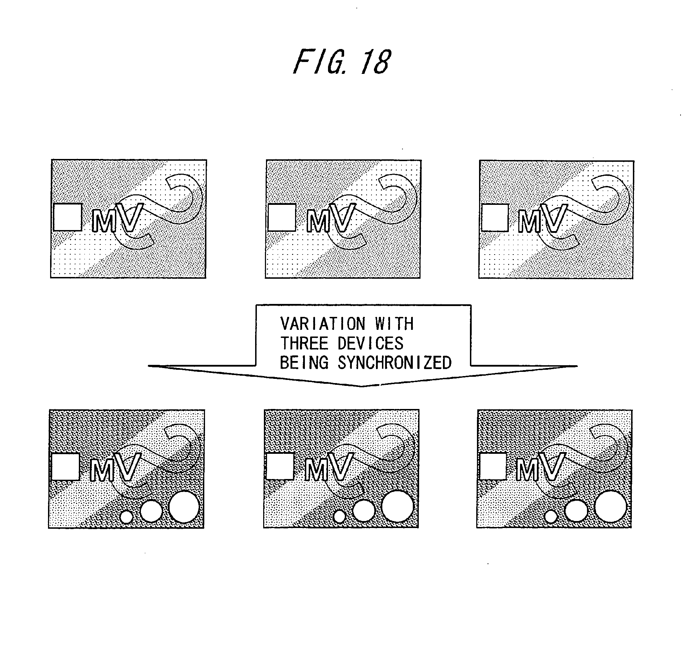

A second embodiment of the present invention will hereinafter be described with reference to FIGS. 18 through 23. The first embodimen thas exemplified the process, wherein the variety of moving images are displayed as the standby screen (screen image) of the information processing apparatus, and the image displayed just when the user starts operating the keyboard or the mouse etc or the image (see FIGS. 15 - 17) having the predetermined relationship with this displayed image, is set as the desktopbackscreen (initial background image) (the so-called wallpaper) in the normal operation.

The second embodiment will exemplify an example in which the plurality of information processing apparatus connected to each other via the network display such moving images in association with each other. Other configurations and operations in the second embodiment are the same as those in the case of the first embodiment. This being the case, the same components are marked with the same numerals and symbols, and hence their explanations are omitted. Further, the drawings in FIGS. 1 through 17 are referred to when the necessity arises.

### <Example of Screen>

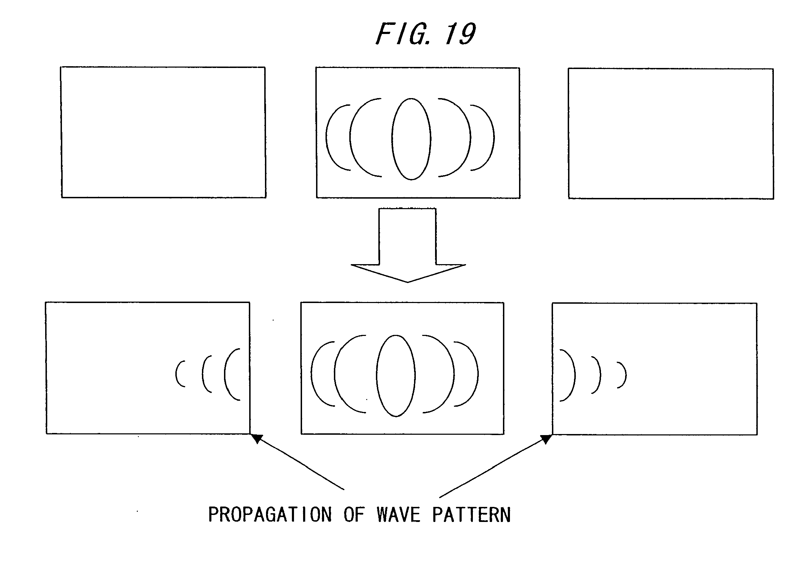

In the second embodiment, the plurality of information processing apparatus are connected to each other via the network such as the LAN (Local Area Network), and display the standby screen in association with each other. FIGS. 18 and 19 illustrate examples of the screens generated by the information processing apparatus. Rectangular areas in FIGS. 18 and 19 individually represent the screens on the information processing apparatus in association with each other via the network.

FIG. 18 shows the example of displaying the standby screen (screen saver) in synchronization taken among the three information processing apparatus. FIG. 19 shows the example, wherein waves occurred on the screen of the central information processing apparatus are propagated and displayed as a wave pattern on the screens of the information processing apparatus on the right and left sides. The information processing apparatus in the second embodiment, when detecting the user operation on the keyboard or the mouse during the display of the standby screen described above, sets the screen (image) at that point of time as the background image (wallpaper) on the desktop screen.

### <Processing Flow>

As described above, in the second embodiment, the plurality of information processing apparatus control the output of the standby screen in association with other information processing apparatus. In this case, any one of the information processing apparatus may function as a server, while the other information processing apparatus may function as clients.

Then, in the case of performing a role as the server, input information from other personal computers is obtained via the input unit 4, the images are synthesized for every personal computer, and the synthesized image or the synthesizing rule is supplied via the output interface 9 to other personal computers.

On the other hand, in the case of performing a role as the client, the information processing apparatus transmits pieces of information from the variety of sensors/cameras/LANs, which are captured from the self input unit 4, to the personal computer serving as the server via the output interface 9 in order to synthesizes the images. Further, the synthesized image or the synthesizing rule is obtained from the personal computer serving as the server via the input unit 4.

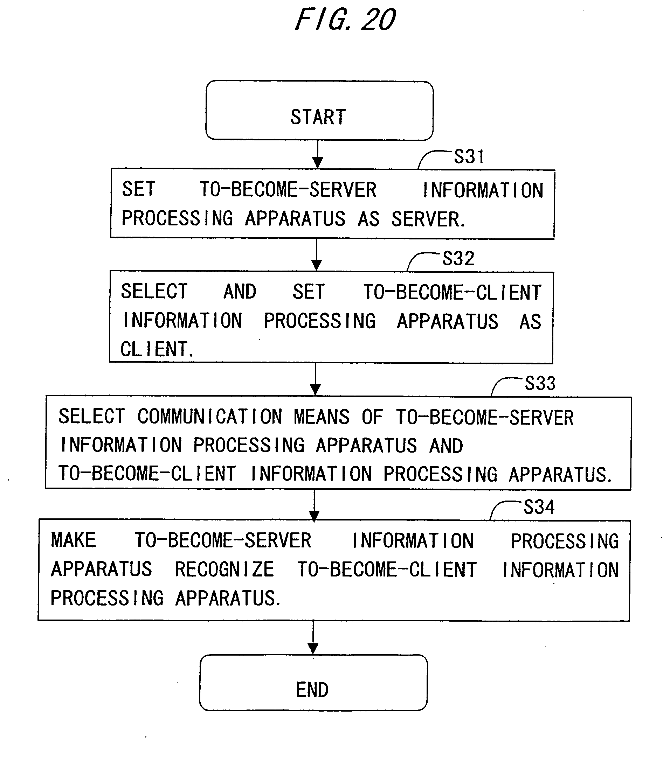

FIG. 20 is a processing flowchart showing a setting procedure of setting the clients and the server. In this procedure, the user, at first, sets a to-become-server information processing apparatus as a server (S31). For example, a character string "SERVER" may be set in a predetermined data file. With this setting, a program executing the association process with other information processing apparatus may provide the to-become-server information processing apparatus with a function as the server.

Further, the user selects and sets a to-become-client information processing apparatus as the client (S32). For example, a character string "CLIENT" may be set in a predetermined data file. With this setting, the program executing the association process with other information processing apparatus may provide the to-become-client information processing apparatus with a function as the client.

Next, the user sets communication means of the to-become-server information processing apparatus and of the to-become-client information processing apparatus (S33). For example, an interface of the LAN may be selected. According to this setting, the program executing the association process with other information processing apparatus may perform the communications via the LAN.

Next, the user makes the to-become-server information processing apparatus recognize the to-become-client information processing apparatus (S34). For attaining this kind of client recognition, for instance, the to-become-server information processing apparatus broadcasts onto the LAN, and may wait for a response from the client. Further, the user may manually input an enumeration of host names of the clients in the predetermined data file of the to-become-server information processing apparatus.

Through the procedure given above, the setting of the information processing apparatus (the clients and the server) in the second embodiment, is finished.

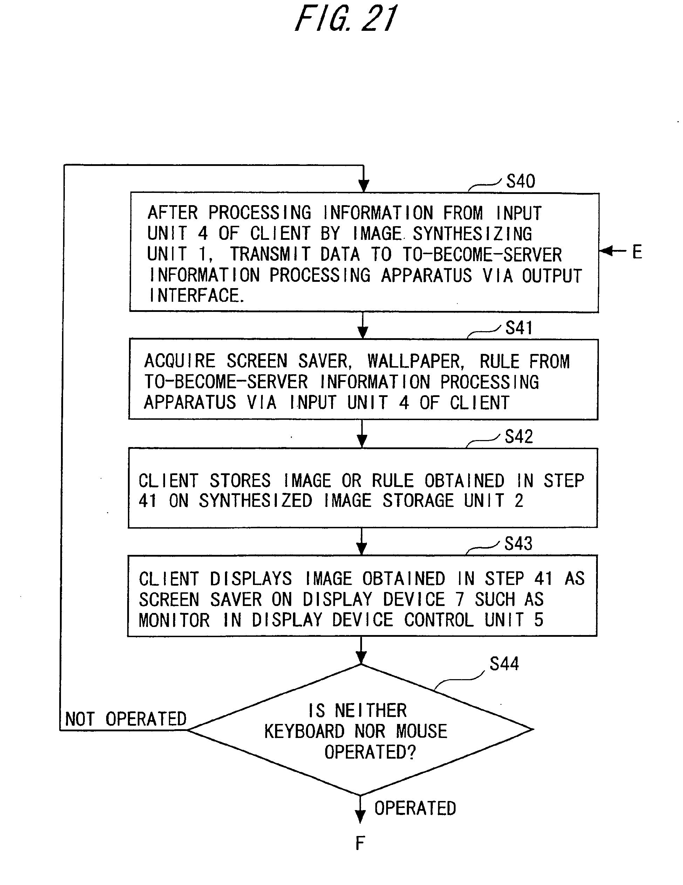

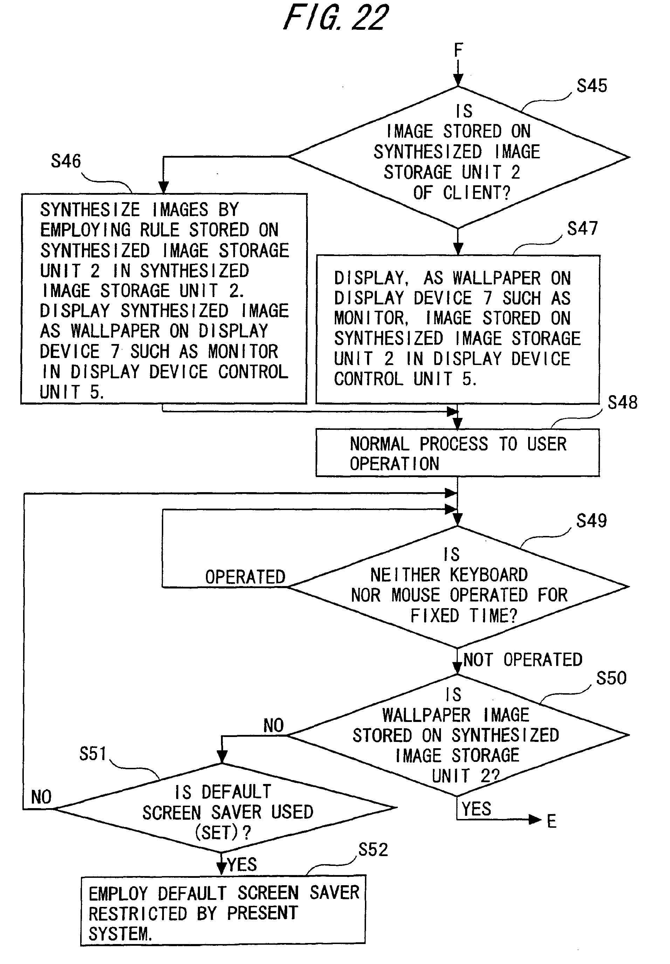

FIGS. 21 and 22 show flowcharts of a background image (wallpaper) setting process in the second embodiment.

In this process, to begin with, the client, after the image synthesizing unit 1 has processed the information from the input unit 4, transmits the data to the to-become-server information processing apparatus via the output interface 9 (S40).

Next, the client acquires, via the input unit 4, the screen saver, the wallpaper and the rule from the to-become-server information processing apparatus (S41). Then, the client stores the synthesized image storage unit 2 with the image or the rule obtained in step 2 (S42).

Subsequently, the client displays, as the screen saver, the image synthesized in step 41 in the display device control unit 5 on the display device 7 such as the monitor (S43).

Next, the client judges whether the keyboard operation or the mouse operation is done or not (S44) . If neither the keyboard operation nor the mouse operation is detected, the client returns the control to S40.

Whereas if either the keyboard operation or the mouse operation is detected, the client whether or not the image is stored on the synthesized image storage unit 2 (whether the rule is stored or not) (S45).

If none of the image is storedon the synthesized image storage unit 2 (if the rule is stored), in the client, the image synthesizing unit 1 synthesizes the images by use of the rule stored on the synthesized image storage unit 2. Further, the display device control unit 5 in the client displays the synthesized image as the background image (wallpaper) on the display device 7 such as the monitor (S46). Thereafter, the client starts a normal process with respect to the user operation (S48) .

While on the other hand, if the image is stored on the synthesized image storage unit 2, the display device control unit 5 in the client displays the image stored on the synthesized image storage unit 2 as the background image (wallpaper) on the display device 7 such as the monitor (S47) . Thereafter, the client starts the normal process with respect to the user operation (S48).

Next, the client monitors whether neither the keyboard operation nor the mouse operation is done for a predetermined period of time (S49). If neither the keyboard operation nor the mouse operation is done for the predetermined period of time, the client judges whether or not the background image (wallpaper) is the image stored on the synthesized image storage unit 2 (S50).

If the background image (wallpaper) is the image stored on the synthesized image storage unit 2, the client returns the control to S40. Whereas if the background image (wallpaper) is not the image stored on the synthesized image storage unit 2, the client judges whether setting of employing the default standby screen (screen saver) is made or not (S51).

If set to use the default standby screen, the client uses the conventional standby screen (screen saver) according to this setting. Whereas if not set to use the default standby screen, the client returns the control to S49. Accordingly, in this case, the standby screen is not displayed.

As described above, according to the second embodiment, the pluralityof information processing apparatus explained in the first embodiment output the standby screen in association with each other. Further, as in the first embodiment, at the point of time when the operation of the keyboard 6A or the mouse 6B with respect to the standby screen is detected, the image (the image stored on the synthesized image storage unit 2) on the standby screen at that point of time is set as the desktop background image. Accordingly, as by the information processing apparatus in the first embodiment, the desktop backscreen can be readily and frequently updated, and the backscreen that maintains the relevancy can be set among the plurality of information processing apparatus.

### <Modified Example>

The second embodiment has exemplified the example, wherein any one of the information processing apparatus functions as the server, while other information processing apparatus function as the clients, and the plurality of information processing apparatus display the standby screen in association with each other. The plurality of information processing apparatus may, however, be set in association with each other without providing the server.

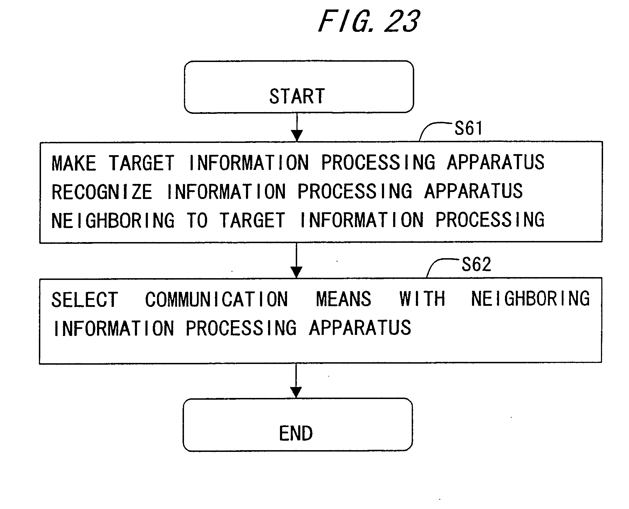

FIG. 23 is a flowchart showing a procedure of setting such information processing apparatus. In this process, the user gets the target information processing apparatus to recognize the information processing apparatus neighboring to the target information processing apparatus (S61). The neighboring information processing apparatus connotes a transfer destination to which each information processing apparatus can transfer the data directly.

Next, the user, in each information processing apparatus, selects the communication means with the neighboring information processing apparatus (S62). For instance, the interface of the LAN may be selected. Through the procedure described above, the setting of the information processing apparatus (the clients and the server) in the second embodiment is finished.

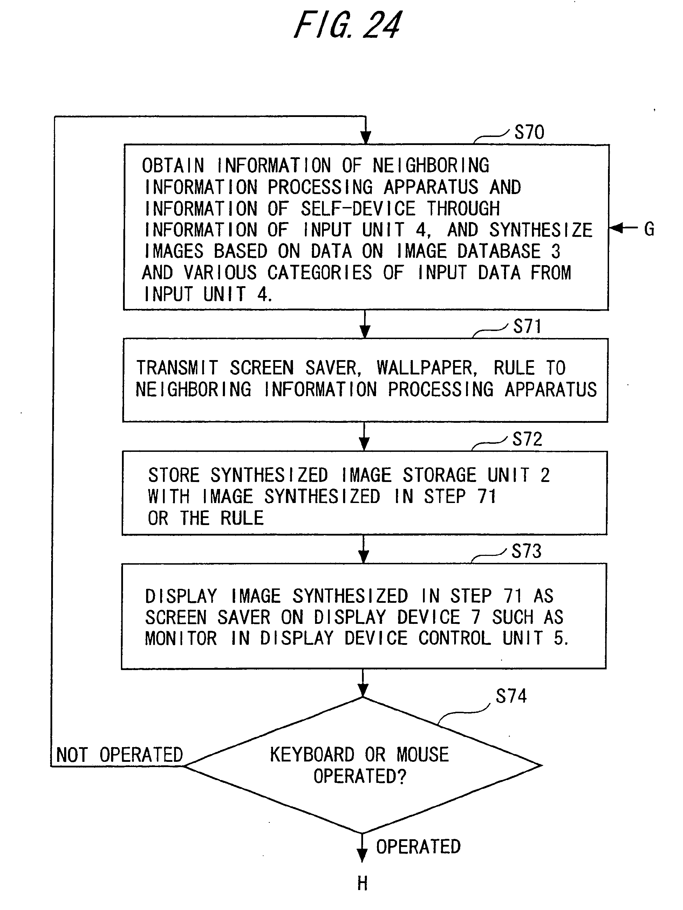

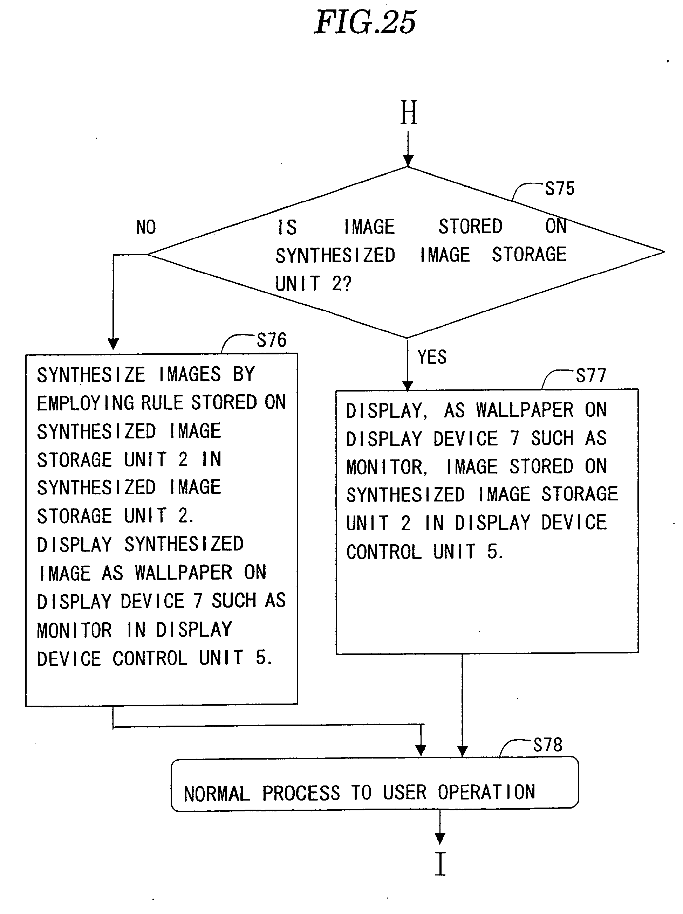

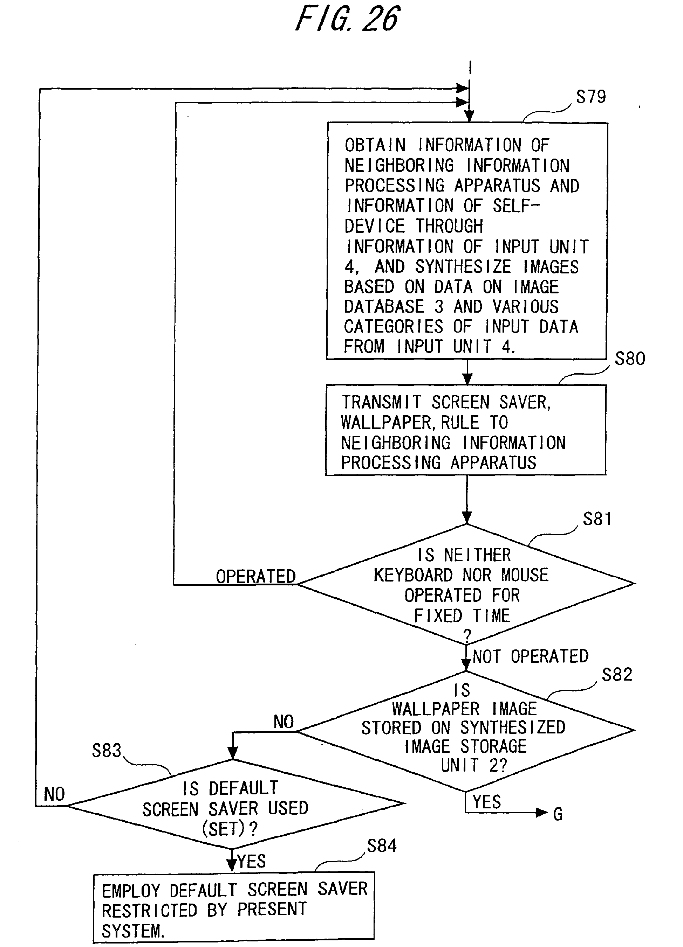

FIGS. 24 through 26 are flowcharts showingaprocess of setting the background image by the plurality of information processing apparatus. In this process, each information processing apparatus obtains the information about the neighboring information processing apparatus and the information about the self-device via the input unit 4. Then, in the information processing apparatus, the image synthesizing unit 1 synthesizes the images on the basis of the data on the image database 3 and the variety of input data from the input unit 4 (S70).

Next, the information processing apparatus transmits the standby screen (screen saver), the wallpaper and the rule to the neighboring information processing apparatus (S71).

Subsequently, the present information processing apparatus stores the synthesized image storage unit 2 with the image synthesized in step 71 or the rule showing the image synthesizing rule thereof (S72).

Next, in the present information processing apparatus, the display device control unit 5 displays the image synthesized in step 71 as the screen saver (standby screen) on the display device 7 such as the monitor (S73).

Subsequently, the present information processing apparatus judges whether either the keyboard operation or the mouse operation is done or not (S74). If neither the keyboard operation nor the mouse operation is done, the information processing apparatus returns the control to S71. Whereas if any one of the keyboard operation and the mouse operation is detected, the information processing apparatus judges whether or not the image is stored on the synthesized image storage' unit 2 (whether the rule is stored or not) (S75).

If none of the image is stored on the synthesized image storage unit 2 (if the rule is stored), in the present information processing apparatus, the image synthesizing unit 1 synthesizes the images by use of the rule stored on the synthesized image storage unit 2. Further, the display device control unit 5 in the present information processing apparatus displays the synthesized image as the background image (wallpaper) on the display device 7 such as the monitor (S76). Thereafter, the information processing apparatus starts the normal process with respect to the user operation (S78).

While on the other hand, if the image is stored on the synthesized image storage unit 2, the display device control unit 5 in the present information processing apparatus displays the image stored on the synthesized image storage unit 2 as the background image (wallpaper) on the display device 7 such as the monitor (S77) . Thereafter, the information processing apparatus starts the normal process with respect to the user operation (S78).

Next, the information processing apparatus obtains the information about the neighboring information processing apparatus and the information about the self-device through the information of the input unit 4. Then, in the information processing apparatus, the image synthesizing unit 1 synthesizes the images on the basis of the data on the image database 3 and the variety of input data given from the input unit 4 (S79).

Next, the information processing apparatus transmits the screen saver, the wallpaper and the rule to the neighboring information processing apparatus (S80).

Subsequently, the information processing apparatus monitors whether neither the keyboard operation nor the mouse operation is done for the predetermined period of time (S81). If neither the keyboard operation nor the mouse operation is done for the predetermined period of time, the information processing apparatus next judges whether or not the background image (wallpaper) is the image stored on the synthesized image storage unit 2 (S82).

If the background image (wallpaper) is the image stored on the synthesized image storage unit 2, the information processing apparatus returns the control to S71. Whereas if the background image (wallpaper) is not the image stored on the synthesized image storage unit 2, the information processing apparatus judges whether setting of employing the default standby screen (screen saver) is made or not (S83) .

If set to use the default standby screen (screen saver), the present information processing apparatus uses the conventional standby screen(screen saver) according to this setting (S84). Whereas if not set to use the default standby screen (screen saver), the present information processing apparatus returns the control to S9. Accordingly, in this case, the standby screen is not displayed.

As described above, according to the system in the present modified example, the individual information processing apparatus autonomously operate in association with each other through no intermediary of the server, and output the standby screen in the status with no user operation done. Then, when the user operation on the keyboard or the mouse etc is detected, the screen (image) at that point of time is set as the desktop backscreen (initial background image).

It is to be noted that as explained in FIGS. 15 - 17 in the first embodiment, in the second embodiment also, when the user operation is detected, the image associated with the image on the standby screen displayed at that point of time, may also be set as the background image.

### <<Storage Medium Readable by Computer etc>>

A program for making a computer, other devices, machines, etc actualize any one of the functions given above can be stored on a storage medium readable by the computer, etc. Then, the computer etc reads and executes the program on this storage medium, whereby the function can be provided.

Herein, the storage medium readable by the computer etc connotes a storage medium capable of storing information such as data and programs electrically, magnetically, optically, mechanically or by chemical action, which can be read from the computer and so on. Among these storage mediums, for example, a flexible disc, a magneto-optic disc, a CD-ROM, a CD-R/W, a DVD, a DAT, an 8 mm tape, a memory card, etc are given as those demountable from the computer.

Further, a hard disc, a ROM (Read-Only Memory), etc are given as the storage mediums fixed within the computer.

### <<Data Communication Signal Embodied in Carrier Wave>>

Furthermore, the program can be stored on the hard disk and the memory of the computer, and distributed to other computers via communication mediums. In this case, the program is transmitted as data communication signals embodied in carrier waves via the communication mediums. Then, the computer etc receiving the distribution of this program can be made to provide the function described above.

Herein, the communication medium may be any one of cable communication mediums such as metallic cables and optical communication cables including a coaxial cable and a twisted pair cable, and wireless communication mediums such as satellite communications, ground wave wireless communications, etc.

Further, the carrier waves are electromagnetic waves for modulating the data communication signals or the light. The carrier waves may, however, be DC signals. In this case, the data communication signal takes a broadband waveform with now carrier wave. Accordingly, the data communication signal embodied in the carrier wave may be any one of a modulated broadband signal and an unmodulated base band signal (corresponding to a case of setting a DC signal having a voltage of 0 as a carrier wave).

## Claims

1. An information processing apparatus capable of controlling display means displaying information together with a background image, comprising:
display control means making said display means display an image; and
setting means setting, when a predetermined operation is detected in a status where the image is displayed, the background image on the basis of the image.

2. The information processing apparatus according to Claim 1,
wherein said display control means makes said display means display moving images, and
said setting means sets, as the background image, a static image at a specified point of time that is contained in the moving images, corresponding to the predetermined operation.

3. The information processing apparatus according to Claim 2,
wherein said display control means gets the moving images displayed on a standby screen displayed in a status with no user operation done on said information processing apparatus, and
said setting means, when the operation is detected during the display of the standby screen, sets the static image as the background image.

4. The information processing apparatus according to Claim 2 or 3, further comprising:
retaining means retaining a plurality of static images; and
means generating the moving images from the retained static images.

5. The information processing apparatus according to any one of Claims 2 through 4, further comprising:
image storage means stored with the static images forming the moving images and displayed at predetermined points of time,
wherein said setting means sets, as the background image, the static image stored on said image storage means.

6. The information processing apparatus according to any one of Claims 2 through 4, further comprising:
means referring to information on a procedure of generating the moving images; and
storage means stored with information on a procedure of generating the static images forming the moving images and displayed at the predetermined points of time,
wherein said setting means generates the static image according to the information on the procedure and sets the generated static image as the background image.

7. The information processing apparatus according to any one of Claims 1 through 6, further comprising:
means communicating with another information processing apparatus,
wherein said display control means gets the image displayed in accordance with an instruction given from said another information processing apparatus.

8. The information processing apparatus according to Claim 7, further comprising means transmitting, to said another information processing apparatus, information about the image to be displayed by said another information processing apparatus.

9. The information display method by which a computer displays information together with a background image, comprising:
a display step of displaying an image; and
a setting step of setting, when a predetermined operation is detected in an image-displayed status, the background image on the basis of the image.

10. The information display method according to Claim 9, wherein the images are moving images, and
said setting step includes setting, as the background image, a static image at a specified point of time that is contained in the moving images, corresponding to the predetermined operation.

11. The information display method according to Claim 10, further comprising a step of displaying the moving images on a standby screen displayed in a status with no user operation done on said information processing apparatus, and
said setting step involves, when the operation is detected during the display of the standby screen, setting the static image as the background image.

12. The information display method according to Claim 10 or 11, further comprising:
a step of referring to a plurality of static images; and
a step of generating the moving images from the static images.

13. The information display method according to any one of Claims 10 through 12, further comprising:
a step of storing the static images forming the moving images and displayed at predetermined points of time,
wherein said setting step includes setting the stored static image as the background image.

14. The information display method according to any one of Claims 10 through 12, further comprising:
a step of referring to information on a procedure of generating the moving images; and
a step of storing information on a procedure of generating the static images forming the moving images and displayed at the predetermined points of time,
wherein said setting step includes a step of generating the static image according to the procedure information and a step of setting the generated static image as the background image.

15. The information display method according to any one of Claims 9 through 14, further comprising a step of receiving an instruction from another computer,
wherein said display step includes displaying the image in accordance with the instruction.

16. The information display method according to Claim 15, further comprising a step of transmitting, to said another computer, information about the image to be displayed.

17. A program making a computer display information together with a background image, comprising:
a display step of displaying an image; and
a setting step of setting, when a predetermined operation is detected in an image-displayed status, the background image on the basis of the image.

18. The program according to Claim 17, wherein the images are moving images, and
said setting step includes setting, as the background image, a static image at a specified point of time that is contained in the moving images, corresponding to the predetermined operation.

19. The program according to Claim 18, further comprising a step of displaying the moving images on a standby screen displayed in a status with no user operation done on said computer, and
said setting step involves, when the operation is detected during the display of the standby screen, setting the static image as the background image.

20. The program according to Claim 18 or 19, further comprising:
a step of referring to a plurality of static images; and
a step of generating the moving images from the static images.

21. The program according to any one of Claims 18 through 20, further comprising:
a step of storing the static images forming the moving images and displayed at predetermined points of time,
wherein said setting step involves setting the stored static image as the background image.

22. The program according to any one of Claims 18 through 20, further comprising:
a step of referring to information on a procedure of generating the moving images; and
a step of storing information on a procedure of generating the static images forming the moving images and displayed at the predetermined points of time,
wherein said setting step includes a step of generating the static image according to the procedure information and a step of setting the generated static image as the background image.

23. The program according to any one of Claims 17 through 22, further comprising a step of receiving an instruction from another computer,
wherein said display step includes displaying the image in accordance with the instruction.

24. The program according to Claim 23, further comprising a step of transmitting, to said another computer, information about the image to be displayed.

25. The readable-by-computer recoding medium recorded with a program making a computer display information together with a background image, said program comprising:
a display step of displaying an image; and
a setting step of setting, when a predetermined operation is detected in an image-displayed status, the background image on the basis of the image.
